# EUROPEAN PATENT APPLICATION

(11) **EP 1 826 047 A2**
(43) Date of publication of application: **29.08.2007**
(21) Application number: 07003855.9
(22) Date of filing: 26.02.2007
(51) Int. Cl.: B60J 5/10, E05F 15/12

(54) **Electromechanical strut**

(30) Priority: 27.02.2006 US 777079 P
(71) Applicant: Magna Closures Inc., Newmarket, ON L3Y 4X7 (CA)
(72) Inventor: Paton, Gordon Andrew, Sharon Ontario LOG 1VO (CA); Mitchell, Stephen A. G., Pickering Ontario L1V 1J8 (CA)
(74) Representative: Deissler, K. Michael

(57) **Abstract**

An electromechanical strut (10) is provided for moving a pivotal lift gate (13) between an open position and a closed position relative to a motor vehicle body (11). The electromechanical strut (10) includes a housing (12,14) connected to one of the lift gate (13) and the motor vehicle body (11). An extensible shaft (16) is slidably mounted to the housing (12,14). The extensible shaft (16) is connected to the other of the lift gate (13) and the motor vehicle body (11). A drive mechanism includes a rotatable power screw (40). The drive mechanism converts rotary motion of the power screw (40) into linear motion of the extensible shaft (16) to move the extensible shaft (16) between a retracted position corresponding to the closed position of the lift gate (13) and an extended position corresponding to the open position of the lift gate (13). A power spring (68) includes one end connected to the extensible shaft (16) and another end connected to the housing (12,14) for providing a mechanical counterbalance to the weight of the lift gate (13).

## Description

### BACKGROUND OF THE INVENTION

### 1. Field of the Invention

The present invention relates to an electrically-driven, mechanical strut. More specifically, the present invention relates to an electromechanical strut used to raise or lower an automotive closure panel such as a lift gate or deck lid.

### 2. Description of Related Art

Lift gates provide a convenient access to the cargo areas of hatchbacks, wagons and other utility vehicles. Typically, the lift gate is hand operated, requiring manual effort to move the lift gate between the open and the closed positions. Depending on the size and weight of the lift gate, this effort can be difficult for some users. Additionally, manually opening or closing a lift gate can be inconvenient, particularly when the user's hands are full.

Attempts have been made to reduce the effort and inconvenience of opening or closing a lift gate. One solution is to pivotally mount gas struts to both the vehicle body and the lift gate, reducing the force required for opening the lift gate. However, the gas struts also hinder efforts to close the lift gate, as the struts re-pressurize upon closing, increasing the effort required. Additionally, the efficacy of the gas struts varies according to the ambient temperature. Furthermore, the use of gas struts still requires that the lift gate is manually opened and closed.

US patent 6,516,567 to Stone et al. (hereafter referred to as the `567 patent) provides a power actuator that works in tandem with a gas strut. The `567 power actuator comprises a motor mounted within the vehicle body coupled to a flexible rotary cable by a clutch. The flexible rotary cable drives an extensible strut that is pivotally mounted to both the vehicle body and the lift gate. Thus, the motor can raise or lower the lift gate conveniently without manual effort. A controller to engage and disengage the motor can be connected to a remote key fob button or a button in the passenger compartment, providing additional convenience.

The power actuator described in the '567 patent is not without its disadvantages. The power actuator is comprised of multiple parts, each of which needs to be assembled and mounted to the vehicle separately, increasing costs. The vehicle body must be specifically designed provide a space to house the motor. Due to the limited space available, the motor is small and requires the assistance of the gas strut. Additionally, because the power actuator described in the '567 patent is designed to work in tandem with a gas strut, the gas strut can still vary in efficacy due to temperature. Thus, the motor provided must be balanced to provide the correct amount of power with varying degrees of mechanical assistance from the gas strut.

A more compact drive mechanism is sought.

### SUMMARY OF THE INVENTION

According to one aspect of the invention, an electromechanical strut is provided for moving a pivotal lift gate between an open position and a closed position relative to a motor vehicle body. The electromechanical strut includes a housing connected to one of the lift gate and the motor vehicle body. An extensible shaft is slidably mounted to the housing. The extensible shaft is connected to the other of the lift gate and the motor vehicle body. A drive mechanism includes a rotatable power screw. The drive mechanism converts rotary motion of the power screw into linear motion of the extensible shaft to move the extensible shaft between a retracted position corresponding to the closed position of the lift gate and an extended position corresponding to the open position of the lift gate. A power spring includes one end connected to the extensible shaft and another end connected to the housing for providing a mechanical counterbalance to the weight of the lift gate.

### BRIEF DESCRIPTION OF THE DRAWINGS

The invention will now be described, by way of example only, with reference to the attached Figures, wherein:

Fig. 1 shows a perspective view of a motor vehicle having a lift gate controlled by a pair of electromechanical struts;

Fig. 2 shows a cross-section view in side profile of the electromechanical strut including an extensible shaft in a retracted position; and

Fig. 3 shows a cross-section view in side profile of the electromechanical strut including the extensible shaft in an extended position.

### DETAILED DESCRIPTION OF THE INVENTION

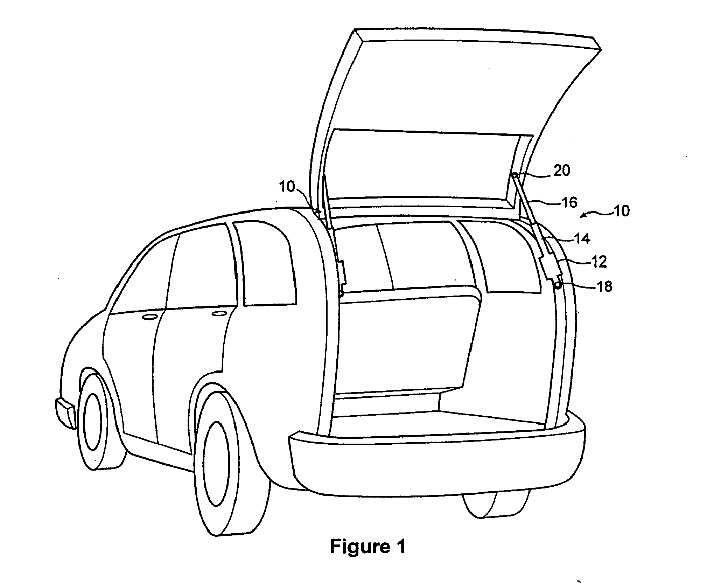

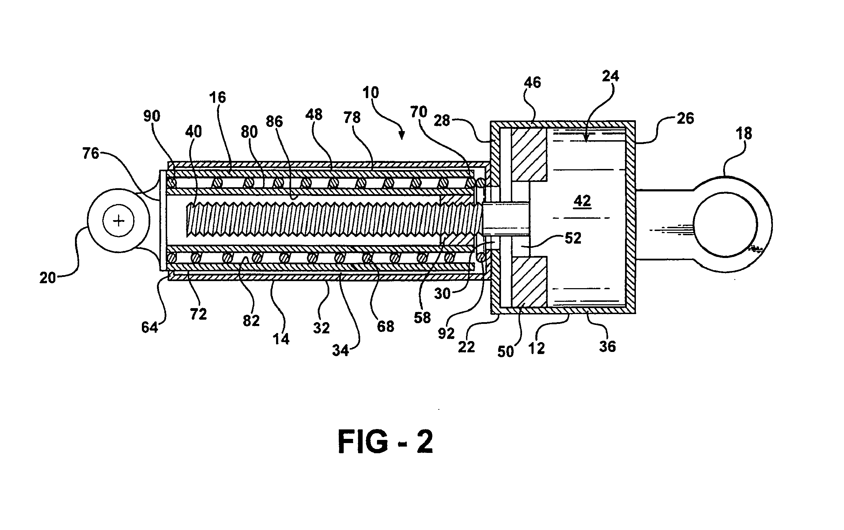

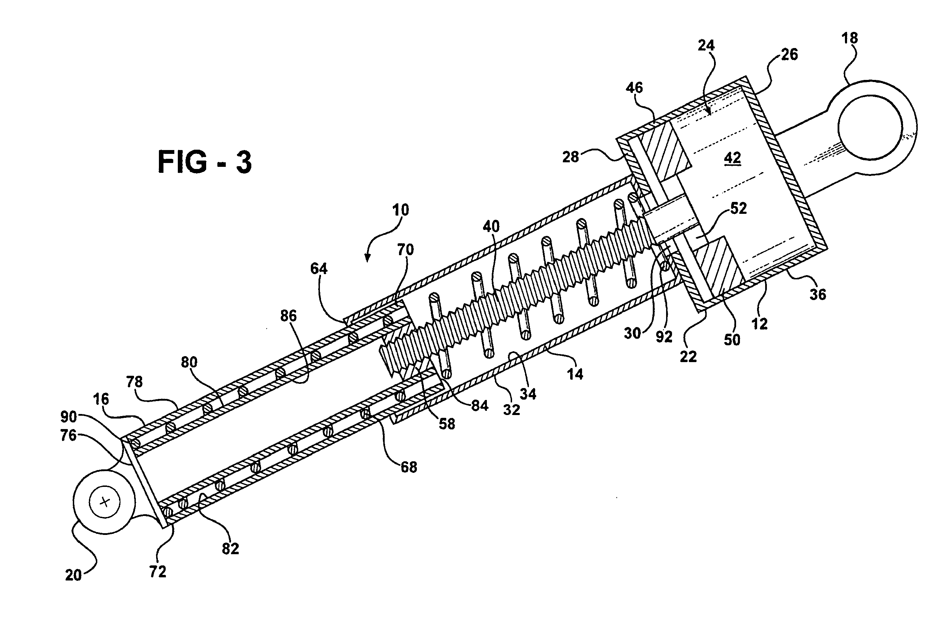

Referring to Figure 1, an electromechanical strut, generally shown at 10, is operably coupled between a motor vehicle body 11 and a lift gate 13. The electromechanical strut 10 includes a lower housing 12, an upper housing 14, and an extensible shaft 16. The extensible shaft 16 is movable between a retracted position, shown in Figure 2, corresponding to a closed position of the lift gate 13 and an extended position, shown in Figure 3, corresponding to an open position of the lift gate 13.

A first pivot mount 18 is located at one end of the lower housing 12 and is pivotally mounted a portion of the motor vehicle body 11 that defines an interior cargo area. A second pivot mount 20 is attached to the extensible shaft 16 and is pivotally mounted to the lift gate 13.

Referring to Figures 2 and 3, the lower housing 12 includes a cylindrical sidewall 22 defining a chamber 24. The first pivot mount 18 is attached to an end wall 26 of the lower housing 12. The upper housing 14 includes a cylindrical sidewall 32 defining a chamber 34 that is open at both ends. A distal end wall 28 of the lower housing 12 includes an aperture 30 so that the chambers 24, 34 are in open communication with each other. The upper housing 14 has a smaller diameter than the lower housing 12. However, it is contemplated that the lower housing 12 and the upper housing 14 can be formed as a single cylinder or frusto-cone. Other form factors for the lower housing 12 and the upper housing 14 will occur to those of skill in the art. The upper housing 14 can be integrally formed with the lower housing 12, or it can be secured to the lower housing 12 through conventional means (threaded couplings, weld joints, etc).

A motor-gear assembly 36 is seated in the chamber 24. The motor-gear assembly 36 includes a motor 42, a planetary gearbox 46, and a power screw 40. The motor 42 is mounted within the chamber 24 near the end wall 26. The motor 42 is secured to at least one of the cylindrical sidewall 36 and the end wall 26 to prevent undesired vibrations or rotation. The motor 42 is preferably a direct current bi-directional motor. Electrical power and direction control for the motor 42 is provided via electrical cables (not shown) routed into the motor vehicle body 11 through apertures in the end wall 26.

The planetary gearbox 46 is a two-stage planetary gear that provides torque multiplication for the power screw 40. In turn, a number of planetary gears 52 transfer power from a ring gear 50 to the power screw 40, which is centrally journaled within the planetary gearbox 46, to provide the desired gear ratio reduction to the power screw 40. The planetary gearbox 46 provides a 20:1 gear radio reduction. However, other gear ratio reductions will occur to those of skill in the art. The power screw 40 extends into the upper housing 14.

The extensible shaft 16 extends between opposing first 70 and second 72 ends. The first end 70 of the extensible shaft 16 is open and the second end 72 of the extensible shaft 16 is closed off by an end wall 76. The second end 72 of the extensible shaft 16 is connected to the second pivot mount 20.

The extensible shaft 16 includes an outer cylindrical wall 78, and an inner cylindrical wall 80 spaced apart inwardly from the outer cylindrical wall 78. One end of the inner cylindrical wall 80 is connected to the end wall 76. The outer cylindrical wall 78 and the inner cylindrical wall 80 define a toroidal chamber 82 therebetween. One end of the toroidal chamber 82 is closed off by the end wall 76 and an opposing end of the toroidal chamber 82 defines an opening 84. The inner cylindrical wall 80 further defines a cylindrical chamber 86 radially inward of the toroidal chamber 82. The cylindrical chamber 86 is separated from the toroidal chamber 82 by the inner cylindrical wall 80.

A drive nut 58 is rigidly mounted in the cylindrical chamber 86 of the extensible shaft 16. The drive nut 58 is coupled with the power screw 40 in order to convert the rotational movement of the power screw 40 into linear motion of the extensible shaft 16 along a longitudinal axis 88 of the power screw 40.

A power spring 68 is seated within the toroidal chamber 82. The power spring 68 includes one end 88 connected to the second end 72 of the extensible shaft 16, and another end 90 connected to the upper housing 14 adjacent the lower housing 12. The power spring 68 is a coil spring that uncoils and recoils as the extensible shaft 16 moves relative to the upper 14 and lower 12 housings. It is, however, appreciated that the particular type of spring may vary. An integrally-formed outer lip 64 in the upper housing 14 provides an environmental seal between the chamber 34 and the external environment.

In powered operation, torque provided by motor 42 is transferred via the planetary gearbox 46 to screw 40, causing linear motion of the extensible shaft 16 as described above. For manual operation, the motor and the gearbox must be back driven. The friction in the system due to the direct engagement of the motor and gearbox with the screw allows the liftgate to remain still in any intermediate position between the open and closed positions. The electromechanical strut thus provides stable intermediate positions for the liftgate (useful, for example, for garages with low ceilings) without power consumption by using the internal friction of the motor-gear assembly 32.

The power spring 68 provides a mechanical counterbalance to the weight of the lift gate. The power spring 68, which is preferably in the form of a coil spring, assists in raising the lift gate both in its powered and un-powered modes. When extensible shaft 16 is in its retracted position, the power spring 68 is tightly compressed between the shaft 16 and the lower housing. As power screw 40 rotates to extend shaft 16, power spring 68 extends too, releasing its stored energy and transmitting an axial force through the shaft 16 to help raise the lift gate. When power screw 40 rotates to retract extensible shaft 16, or when the liftgate is manually closed, power spring 68 is compressed between the shaft and the housing and thus recharges.

In addition to assisting to drive power screw 40, the power spring 68 also provides a preloading force for reducing starting resistance and wear of the motor 42. Furthermore, power spring 68 provides dampening assistance when the lift gate is closed. Unlike a gas strut, power spring 68 is generally not affected by temperature variations, nor does it unduly resist manual efforts to close the lift gate.

In alternative embodiments of the invention, a ball screw assembly as known in the art per se could be used in lieu of drive nut 58. Also, although reference has been made specifically to a liftgate, it is appreciated that the invention may be applied to a variety of other closure panels such as trunks or deck lids.

The above-described embodiments of the invention are intended to be examples of the present invention and alterations and modifications may be effected thereto, by those of skill in the art, without departing from the spirit of the invention.

## Claims

1. An electromechanical strut for moving a pivotal lift gate between an open position and a closed position relative to a motor vehicle body, the electromechanical strut comprising:
a housing connected to one of the lift gate and the motor vehicle body;
an extensible shaft slidably mounted to the housing, the extensible shaft connected to the other of the lift gate and the motor vehicle body;
a drive mechanism including a rotatable power screw, the drive mechanism converting rotary motion of the power screw into linear motion of the extensible shaft to move the extensible shaft between a retracted position corresponding to the closed position of the lift gate and an extended position corresponding to the open position of the lift gate; and
a power spring having one end connected to the extensible shaft and another end connected to the housing for providing a mechanical counterbalance to the weight of the lift gate.

2. An electromechanical strut as set forth in claim 1 including a motor-gear assembly operably coupled to the power screw.

3. An electromechanical strut as set forth in claim 2 including a drive nut fixedly secured to the extensible shaft and threadedly engaging the power screw.

4. An electromechanical strut as set forth in claim 3 wherein the extensible shaft includes an inner cylindrical wall dividing an interior of the extensible shaft into first and second chambers.

5. An electromechanical strut as set forth in claim 4 wherein the power spring is received within the first chamber.

6. An electromechanical strut as set forth in claim 5 wherein the power screw is received within the second chamber.

7. An electromechanical strut as set forth in claim 6 wherein the second chamber is disposed radially inwardly from the first chamber.

8. An electromechanical strut as set forth in claim 1 wherein the power spring is a coil spring that uncoils and recoils as the extensible shaft moves relative to the housing.

9. An electromechanical strut for moving a pivotal lift gate between an open position and a closed position relative to a motor vehicle body, the electromechanical strut comprising:
a housing connected to one of the lift gate and the motor vehicle body;
an extensible shaft slidably mounted to the housing and connected to the other of the lift gate and the motor vehicle body, the extensible shaft including spaced apart outer and inner cylindrical walls defining a toroidal chamber therebetween;
a drive mechanism including a rotatable power screw, the drive mechanism converting rotary motion of the power screw into linear motion of the extensible shaft to move the extensible shaft between a retracted position corresponding to the closed position of the lift gate and an extended position corresponding to the open position of the lift gate; and
a power spring disposed within the toroidal chamber of the extensible shaft for providing a mechanical counterbalance to the weight of the lift gate.

10. An electromechanical strut as set forth in claim 9 wherein the power spring includes one end connected to the extensible shaft and another end connected to the housing

11. An electromechanical strut as set forth in claim 10 wherein the inner cylindrical wall of the extensible shaft defines a cylindrical chamber opposite the toroidal chamber for receiving the power screw.

12. An electromechanical strut as set forth in claim 11 wherein the extensible shaft includes a first end closed by an end wall and an opposing second end in open communication with the housing.

13. An electromechanical strut as set forth in claim 12 wherein the toroidal chamber includes an opening at the second end of the extensible shaft for receiving the power spring therethrough.

14. An electromechanical strut as set forth in claim 13 wherein the power spring uncoils and recoils as the extensible shaft moves relative to the housing.

15. An electromechanical strut as set forth in claim 14 including a motor-gear assembly operably coupled to the power screw.

16. An electromechanical strut as set forth in claim 15 including a drive nut fixedly secured to the extensible shaft and threadedly engaging the power screw.
